(19)

Europäisches Patentamt

European Patent Office

Office européen des brevets

(11)  **EP 4 533 035 B1**

(12)  **EUROPÄISCHE PATENTSCHRIFT**

(45) Veröffentlichungstag und Bekanntmachung des Hinweises auf die Patenterteilung:
**27.05.2026  Patentblatt 2026/22**

(21) Anmeldenummer: **23718725.7**

(22) Anmeldetag: **31.03.2023**

(51) Internationale Patentklassifikation (IPC):
**G01C 25/00** (2006.01)     **B60Q 1/10** (2006.01)
**G01P 21/00** (2006.01)     **G01C 21/16** (2006.01)

(52) Gemeinsame Patentklassifikation (CPC):
**G01P 21/00; B60G 17/01908; G01C 25/005;**
B60G 2400/052; B60G 2400/252; B60G 2600/08;
B60Q 1/115; B60Q 2200/38

(86) Internationale Anmeldenummer:
**PCT/EP2023/058568**

(87) Internationale Veröffentlichungsnummer:
**WO 2023/232318 (07.12.2023 Gazette 2023/49)**

(54) **VERFAHREN ZUR KALIBRIERUNG EINER INERTIALMESSSENSORIK EINES FAHRZEUGS**

METHOD FOR CALIBRATING AN INERTIAL MEASUREMENT SENSOR SYSTEM OF A VEHICLE

PROCÉDÉ D'ÉTALONNAGE D'UN ENSEMBLE DE CAPTEURS INERTIELS D'UN VÉHICULE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **30.05.2022  DE 102022001883**

(43) Veröffentlichungstag der Anmeldung:
**09.04.2025  Patentblatt 2025/15**

(73) Patentinhaber: **Mercedes-Benz Group AG**
**70372 Stuttgart (DE)**

(72) Erfinder:
• **YARGELDI, Sinan**
  **72581 Dettingen (DE)**
• **NELSON, Anton**
  **72119 Ammerbuch (DE)**

(74) Vertreter: **Novagraaf Group**
**Chemin de l'Echo 3**
**1213 Onex / Geneva (CH)**

(56) Entgegenhaltungen:
DE-A1- 102005 033 237     DE-A1- 102017 005 019
US-A1- 2004 099 044     US-A1- 2018 154 902

**Beschreibung**

Die Erfindung betrifft ein Verfahren zur Kalibrierung einer Inertialmesssensorik eines Fahrzeugs gemäß dem Oberbegriff des Anspruchs 1.

Die Erfindung betrifft weiterhin ein Verfahren zur Leuchtweitenregulierung zumindest eines Scheinwerfers eines Fahrzeugs.

Es ist bekannt, dass in Fahrzeugen Inertialmesssensoriken auf MEMS-Basis (MEMS = Micro Electro Mechanical Systems) verbaut sind, welche als Drehratensensor eine Drehrate und als Accelerometer oder Beschleunigungssensor eine Beschleunigung des Fahrzeugs in bis zu jeweils drei Raumrichtungen messen. Die Inertialmesssensoriken werden dabei für verschiedene Fahrzeugsysteme, wie beispielsweise eine Fahrdynamikregelung, moderne Anwendungen einer Augmented Reality und ein assistiertes oder automatisiertes Fahren eingesetzt.

Erfassungen derartiger Inertialmesssensoriken können jedoch fehlerbehaftet sein, was bei vielen Anwendungen, die diese Erfassungen verwenden, zu einer Einschränkung einer Nutzbarkeit oder einer erreichbaren Systemgenauigkeit führen kann. Derartige Sensorfehler sind beispielsweise eine fehlerhafte Ausrichtung der jeweiligen Inertialmesssensorik zum Fahrzeug und Offsetfehler einzelner Messachsen. Die Offsetfehler stellen hierbei einen intrinsischen Fehler der Inertialmesssensorik dar, der sich in der Art niederschlägt, dass nicht nur eine aktuell vorliegende Beschleunigung oder Drehrate ausgegeben wird, sondern ein Messwert $x_{meas}$ darüber hinaus auch noch einen konstanten, langsam veränderlichen Offset $x_{offset}(t)$ gegenüber einem realen Wert $x_{real}$ gemäß

$$x_{meas} = x_{real} + x_{offset}(t) \qquad (1)$$

aufweist.

Es ist bekannt, dass solche Offsetfehler intern in Fahrzeugen über einen Langzeitabgleich von Messwerten bestimmt werden. Dabei wird angenommen, dass über einen relativ langen Zeithorizont die Summen der Beschleunigungen, da das Fahrzeug bei 0 km/h startet und bei 0 km/h stoppt, und Drehraten, da das Fahrzeug sich nicht kopfüber oder seitlich überschlägt, gleich Null sind. Eine Abweichung bei den Messwerten muss daher zum größten Teil von Offsetkomponenten $x_{offsetschätzung}$ der Inertialmesssensorik stammen, die somit auch abgeschätzt und von den zukünftigen Messwerten gemäß

$$x_{meas} = x_{real} + x_{offset}(t) - x_{offsetschätzung} \approx x_{real} \qquad (2)$$

subtrahiert werden können.

Jedoch können externe Einflüsse, wie eine Lageänderung des Fahrzeugs, beispielsweise durch sich ändernde Nick- oder Wankwinkel, dafür sorgen, dass diese Annahmen nicht mehr gültig sind. Auch ist es nicht möglich, auf die genannte Weise zuverlässig einen Wert für einen Offset der Gierrate zu bestimmen, da sich das Fahrzeug in der Theorie in einer unendlichen stationären Kreisfahrt befinden kann. Deshalb müssen hierbei Informationen von weiteren Sensoren, wie beispielsweise Raddrehzahlsensoren hinzugezogen werden, um einen Referenzwert über eine vorliegende Giersituation zu erhalten.

Durch den Offseteinfluss der Gravitation aufgrund der Fehlausrichtung der Inertialmesssensorik zum Fahrzeugkoordinatensystem wird bereits durch die Offsetfehlerabschätzung versucht, die Wirkung der Einbaulage des Sensors zu kompensieren. Da der Betrag der Gravitation aus der Position des Fahrzeugs auf der Erde bekannt ist, sind überschüssige Beschleunigungsanteile bei einer stationären Situation Offset-bedingt. Da jedoch der Offset pro Sensorachse stark unterschiedlich sein können, ist dennoch keine vollständig korrekte Gravitations-Kompensation und somit Offset-Bestimmung möglich.

Für eine genauere und umfassendere Kalibrierung der jeweiligen Inertialmesssensorik ist ein spezieller Messaufbau notwendig, der für die Offsetkalibrierung vordefinierte Beschleunigungen und Drehraten auf die Inertialmesssensorik gibt und für eine Ausrichtungskalibrierung eine tarierte, horizontale Fläche bereitstellt, bei der Beschleunigungsrichtungen sowohl der Gravitation als auch des Fahrzeugs im Fahrzeugkoordinatensystem definiert sind. Somit kann die Inertialmesssensorik dementsprechend virtuell verdreht werden, was jedoch sehr zeit- und kostenaufwändig ist.

Aus der DE 10 2005 033 237 A1 ist ein Verfahren zum Bestimmen von Fehlorientierungen von Sensoren eines Sensorclusters eines Fahrzeugs bekannt. Der Sensorcluster weist entweder drei lineare Beschleunigungssensoren oder drei Drehratensensoren auf. Gewünschte Einbaurichtungen der Sensoren in Bezug auf Koordinatenachsen eines fahrzeugfesten kartesischen Koordinatensystems werden vorgegeben, wobei wirkliche Einbaurichtungen der Sensoren aufgrund von Fehlerorientierungen von den gewünschten Einbaurichtungen abweichen können. Durch Vergleich von durch die Sensoren gemessenen Werten werden unter unterschiedlichen Bedingungen mit für diese unterschiedlichen Bedingungen bekannten Werten im fahrzeugfesten kartesischen Koordinatensystem wirkliche Einbaurichtungen der Sensoren bestimmt.

Aus der DE 10 2015 115 282 A1 ist ein Verfahren zur Ermittlung einer Orientierung einer Inertialmesssensorik eines Fahrzeugs bezüglich eines Fahrzeugkoordinatensystems bekannt, bei dem ein erstes Sensorsignal der Inertialmesssensorik in einem beschleunigungsfreien Zustand des Fahrzeugs erfasst wird, bei dem ein zweites Sensorsignal der Inertialmesssensorik in einem linear beschleunigten Zustand des Fahrzeugs erfasst wird und bei dem die Orientierung basierend auf dem ersten und zweiten Sensorsignal ermittelt wird. Dabei wird das erste Sensorsignal verwendet, um eine vertikale Ausrichtung der Inertialmesssensorik anhand der Gravitationsbeschleunigung zu finden und das zweite Sensorsignal wird verwendet, um eine Verdrehung der Inertialmesssensorik um eine Vertikalachse des Fahrzeugs zu ermitteln.

Aus der DE 10 2004 045 890 A1 ist ein Verfahren zur Kalibrierung einer Inertialmesssensorik eines Fahrzeugs bekannt, wobei die Inertialmesssensorik als einfacher Beschleunigungssensor zur Messung einer Vertikalbeschleunigung des Fahrzeugs ausgebildet ist. Dabei ist vorgesehen, einen Einfederungszustand des Fahrzeugs bei einem Fahrzeugstillstand zu ermitteln und als Referenzwert zu speichern. Der Einfederungszustand des Fahrzeugs wird während eines Fahrbetriebs des Fahrzeugs fortlaufend ermittelt und sobald der gemessene Einfederungszustand dem als Referenzwert gespeicherten Einfederungszustand entspricht, wird ein Ruhewert des einfachen Beschleunigungssensors auf einen vorgegebenen Wert eingestellt.

Aus der CN 1 08 819 831 A ist ein Verfahren zum Einstellen eines Abblendlichts eines Fahrzeugs bekannt, wobei eine Lichteinstelleinheit vorgesehen ist, die von einer Inertialmesssensorik Beschleunigungs- und Winkelgeschwindigkeitsdaten erhält und über einen Datenbus Fahrzeuginformationen erhält. Die Lichteinstelleinheit ermittelt aus den erhaltenen Informationen einen Nickwinkel des Fahrzeugs und stellt eine Beleuchtungsentfernung des Abblendlichts in Abhängigkeit des Nickwinkels ein.

Aus der WO 2017/129 199 A1 ist ein Verfahren zum Bestimmen eines Kippzustands eines Fahrzeugs bezüglich einer Fahrbahnoberfläche bekannt, wobei die Bestimmung mittels eines Kippmodells anhand von Messwerten erfolgt und wobei die Messwerte mit einer Inertialmesssensorik ermittelt werden.

Aus der US 2013/0 166 099 A1 ist ein Verfahren zum Überwachen eines Zustands eines Fahrzeugs bekannt, bei dem mittels einer Inertialmesssensorik Messwerte während eines Fahrbetriebs des Fahrzeugs erfasst und über einen Zeitraum abgetastet werden und bei dem anhand der Messwerte eine Rotationsmatrix bestimmt wird, die einen Versatz zwischen einer Ausrichtung der Inertialmesssensorik und einer tatsächlichen Ausrichtung des Fahrzeugs repräsentiert.

Aus der EP 3 171 134 A1 ist ein Verfahren zum Kalibrieren einer Inertialmesssensorik eines Fahrzeugs bekannt, wobei Sensordaten der Inertialmesssensorik an zwei stationären Positionen des Fahrzeugs bei unterschiedlichen Fahrzeugausrichtungen erfasst werden und wobei weiterhin Sensordaten der Inertialmesssensorik bei einer Geradesausfahrt mit konstanter Geschwindigkeit, bei einer Kurvenfahrt nach rechts und bei einer Kurvenfahrt nach links erfasst werden und wobei anhand der erfassten Sensordaten Fehlausrichtungen und Offsets bezüglich eines Fahrzeugkoordinatensystems ermittelt werden.

Die DE 102017005019 A1 beschreibt eine Beleuchtungsvorrichtung für Fahrzeuge, die mindestens einen Scheinwerfer, einen Lage- oder Beschleunigungssensor und eine Steuereinheit umfasst. Der Sensor erfasst Nickbewegungen des Fahrzeugs, und die Steuereinheit kompensiert daraufhin die durch diese Bewegungen verursachten Veränderungen der Hell-Dunkel-Grenze des Scheinwerfers.

Das Dokument US 20180154902 A1 beschreibt Fahrzeuge, Fahrzeugsteuerungssysteme und -methoden zur Regelung einer Fahrzeugfunktion. Dabei wird eine Beschleunigungskomponente des Fahrzeugs gemessen. Zusätzlich werden die Fahrbahnneigung wie Steigung/Gefälle und/oder der Querneigungswinkel, d.h. eine Überhöhung der befahrenen Straße ermittelt. Die Fahrzeugfunktion wird dann basierend auf der gemessenen Beschleunigungskomponente und der Fahrbahnneigung bzw. dem Querneigungswinkel gesteuert.

Aus der US 2004/099044 A1 ist ein Verfahren zur Bestimmung des Offsetwerts eines im Fahrzeug installierten Längsbeschleunigungssensors bekannt.

Der Erfindung liegt die Aufgabe zu Grunde, ein neuartiges Verfahren zur Kalibrierung einer Inertialmesssensorik eines Fahrzeugs und ein neuartiges Verfahren zur Leuchtweitenregulierung zumindest eines Scheinwerfers eines Fahrzeugs anzugeben. Die Aufgabe wird erfindungsgemäß gelöst durch ein Verfahren zur Kalibrierung einer Inertialmesssensorik eines Fahrzeugs, welches die im Anspruch 1 angegebenen Merkmale aufweist, und durch ein Verfahren zur Leuchtweitenregulierung zumindest eines Scheinwerfers eines Fahrzeugs, welches die im Anspruch 9 angegebenen Merkmale aufweist.

Vorteilhafte Ausgestaltungen der Erfindung sind Gegenstand der Unteransprüche.

Beim erfindungsgemäßen Verfahren zur Kalibrierung einer Inertialmesssensorik eines Fahrzeugs wird die Kalibrierung während eines Fahrbetriebs des Fahrzeugs, durchgeführt. Die Kalibrierung beruht dabei auf der Ermittlung einer Fehlausrichtung eines Sensorkoordinatensystems der Inertialmesssensorik bezüglich eines Fahrzeugkoordinatensystems, wobei die Ermittlung der Fehlausrichtung in Situationen unterbrochen wird, in denen mittels zumindest eines fahrzeugeigenen Niveausensors eine einen vorgegebenen Schwellwert übersteigende Niveauabweichung gegenüber einem Referenzniveau festgestellt wird.

Damit Inertialmesssensoriken basierend auf Beschleunigungssensoren einen korrekten Winkel zwischen dem Fahrzeug und einer Fahruntergrundebene, beispielsweise einer Fahrbahnoberfläche, liefern können, werden Informationen über die eingebaute Inertialmesssensorik benötigt. Je nach Sensor-Package, Einbaulage auf einer Platine sowie einer Orientierung eines entsprechenden Steuergeräts im Fahrzeug werden unterschiedliche, beispielsweise rotierte, Beschleunigungen gemessen. Diese Messungen müssen intern mit Informationen einer vorangegangenen Kalibration zurück in die Orientierung der Fahrzeugkarosserie, das heißt das Fahrzeugkoordinatensystem, gedreht werden. Da mittels des vorliegenden Verfahrens zwischen Fahrzeugnickwinkeln und Sensoreinbauverdrehungen, welche sich beide identisch auf Messungen auswirken, unterschieden werden kann, ist es mittels des Verfahrens möglich, die Kalibrierung der Inertialmesssensorik automatisiert und selbsttätig durchzuführen. Somit können kosten- und zeitintensive Kalibrierungen unter kontrollierten Bedingungen, in welchen entweder die Fahrzeugnickwinkel oder Sensoreinbauverdrehungen bekannt sein müssen, und welche somit nicht im Feld durchgeführt werden können, entfallen. Dies ist besonders vorteilhaft im Fall eines Fahrzeugbaus im Werk oder bei einem Sensoraustausch, da hier solche kosten- und zeitintensive Kalibrierungen unter kontrollierten Bedingungen entfallen können.

Mittels des vorliegenden Verfahren kann der Vorgang der Kalibrierung bedeutend vereinfacht werden, indem der fahrzeugeigene Niveausensor, welcher beispielsweise an einer Hinterachse des Fahrzeugs eingebaut ist, zur Steuerung der Kalibrierung verwendet wird. Somit kann nach einem Bau des Fahrzeugs oder einem Sensortausch eine Selbstkalibrierungsprozedur gestartet werden, welche in den nächsten Fahrsituationen versucht, die Einbaulage der Inertialmesssensorik relativ zu einer Karosserieebene, das heißt relativ zum Fahrzeugkoordinatensystem, zu erkennen. Iterativ kann nun eine statische Verdrehung zwischen dem Fahrzeugkoordinatensystem, insbesondere einer von einer Querachse und einer Längsachse des Fahrzeugs aufgespannten Ebene, und dem Sensorkoordinatensystem, insbesondere einer von einer Querachse und einer Längsachse des Sensors aufgespannten Ebene, berechnet werden.

Das Verfahren ermöglicht somit eine Steuerung einer automatisierten Online-Kalibration der Inertialmesssorik in einem Fahrzeug nach greifbaren und verständlichen Kriterien und verhindert einen Einfluss von undefinierten Szenarien auf ein Kalibrationsergebnis, wie beispielsweise eine statische Nick- und/oder Wankwinkeländerung. Je nach Ausbaustufe der jeweiligen Inertialmesssensorik, beispielsweise gekennzeichnet durch eine Anzahl von Messachsen eines Beschleunigungssensors und Drehratensensors der Inertialmesssensorik, können verschiedene Fehlerkomponenten, das heißt die Fehlorientierungen und Offsets des Sensorkoordinatensystems, kalibriert werden. Hierzu sind keine zusätzlichen Hardwarekomponenten erforderlich, wodurch ein Material- und Kostenaufwand sowie ein Bauraumbedarf reduziert werden.

Gemäß dem Verfahren wird anhand von Kartendaten einer digitalen Straßenkarte überprüft, ob in einem vorgegebene Abschnitt eine Änderung einer Neigung der Fahruntergrundebene vorliegt, und mittels und einer optischen Umgebungserfassungssensorik überprüft, dass in einem vorgegebenen Abschnitt Profiländerungen der Fahruntergrundebene einen vorgegebenen Schwellwert nicht überschreiten. Mittels der Inertialmesssensorik wird eine Verdrehung des Fahrzeugs im Raum und mittels des Niveausensors eine relative Verdrehung des Fahrzeugs zu einer Fahruntergrundebene ermittelt. Wenn keine Änderung einer Neigung der Fahruntergrundebene vorliegt und Profiländerungen der Fahruntergrundebene den vorgegebenen Schwellwert nicht überschreiten, wird in einem Abgleich der mittels der Inertialmesssensorik ermittelten Verdrehung mit der mittels des Niveausensors ermittelten relativen Verdrehung ein Offset eines Drehratensensors der Inertialmesssensorik ermittelt. Dies ermöglicht eine besonders zuverlässige und exakte Bestimmung des Offsets des Drehratensensors der Inertialmesssensorik.

In einer möglichen Ausgestaltung des Verfahrens wird die Kalibrierung in einem vorgegebenen Zeitraum während des Fahrbetriebs des Fahrzeugs durchgeführt.

In einer möglichen Ausgestaltung des Verfahrens wird die Fehlausrichtung des Sensorkoordinatensystems bezüglich des Fahrzeugkoordinatensystems anhand eines aus einer Ausrichtung einer Längsachse des Sensorkoordinatensystems zu einer Längsachse des Fahrzeugkoordinatensystems ermittelten statischen Nickwinkels ermittelt. Anhand des statischen Nickwinkels können in einfacher und zuverlässiger Weise Situationen des Fahrzeugs ermittelt werden, welche einen großen Einfluss auf Fehlerquellen in der Kalibrierung haben und somit zuverlässig bei der Kalibrierung ausgeschlossen werden können.

In einer weiteren möglichen Ausgestaltung des Verfahrens wird das Fahrzeugkoordinatensystem derart definiert, dass eine von einer Querachse und einer Längsachse des Fahrzeugs aufgespannte Ebene unter vorgegebenen Normalbedingungen parallel zu einer Fahruntergrundebene verläuft.

In einer weiteren möglichen Ausgestaltung des Verfahrens wird anhand einer ermittelten Ausrichtung des Sensorkoordinatensystems, anhand von Kartendaten einer digitalen Straßenkarte, insbesondere einer geografischen Höhe und einer Straßenneigung, und anhand einer Neigung des Fahrzeugs zu einer Fahruntergrundebene eine wirkende Gravitationsbeschleunigung geschätzt. Während des Fahrbetriebs des Fahrzeugs wird in Zeitabschnitten ohne weitere Beschleunigung ein Vergleich einer mittels der Inertialmesssensorik gemessenen Beschleunigung mit der geschätzten Gravitationsbeschleunigung durchgeführt und anhand von Ergebnissen des Vergleichs wird ein Offset der Inertialmesssensorik bezüglich der Beschleunigungsmessung ermittelt. Dies ermöglicht eine besonders zuverlässige und exakte Bestimmung des Offsets der Inertialmesssensorik bezüglich der Beschleunigungsmessung.

In einer weiteren möglichen Ausgestaltung des Verfahrens beruht die Kalibrierung auf einer dem vorgegebenen Zeitraum durchgeführten Erfassung und Auswertung einer Vielzahl von Werten einer Längsbeschleunigung und Querbeschleunigung des Fahrzeugs und kann somit besonders einfach und zuverlässig durchgeführt werden.

In einer weiteren möglichen Ausgestaltung des Verfahrens werden aus den erfassten Werten der Längsbeschleunigung und Querbeschleunigung des Fahrzeugs Langzeitmittelwerte gebildet und die Kalibrierung wird anhand dieser Langzeitmittelwerte durchgeführt. Dies stellt eine weitere Vereinfachung des Verfahrens dar.

In einer weiteren möglichen Ausgestaltung des Verfahrens beruht die Kalibrierung auf zumindest einem lernenden Algorithmus und kann somit automatisiert an unterschiedliche Situationen des Fahrzeugs angepasst und somit optimiert werden.

In dem erfindungsgemäßen Verfahren zur Leuchtweitenregulierung zumindest eines Scheinwerfers eines Fahrzeugs wird eine Inertialmesssensorik gemäß einem zuvor beschrieben Verfahren kalibriert, wobei mittels der kalibrierten Inertialmesssensorik eine Ausrichtung des Fahrzeugs relativ zu einer Fahruntergrundebene ermittelt wird und in Abhängigkeit der ermittelten Ausrichtung die Leuchtweite des Scheinwerfers reguliert wird. Die Kalibrierung der Inertialmesssensorik und eine Verwendung derselben in dem Verfahren zur Leuchtweitenregulierung ermöglicht eine Kompensation von Leuchtweitenänderungen, welche durch Beschleunigungen des Fahrzeugs bedingt sind.

Ausführungsbeispiele der Erfindung werden im Folgenden anhand von Zeichnungen näher erläutert.

Dabei zeigen:

Fig. 1    schematisch ein Fahrzeug, ein Fahrzeugkoordinatensystem, ein Sensorkoordinatensystem sowie ein Fahruntergrund mit einem Untergrundkoordinatensystem und

Fig. 2    schematisch einen Lernverlauf eines Sensor-Einbauwinkels.

Einander entsprechende Teile sind in allen Figuren mit den gleichen Bezugszeichen versehen.

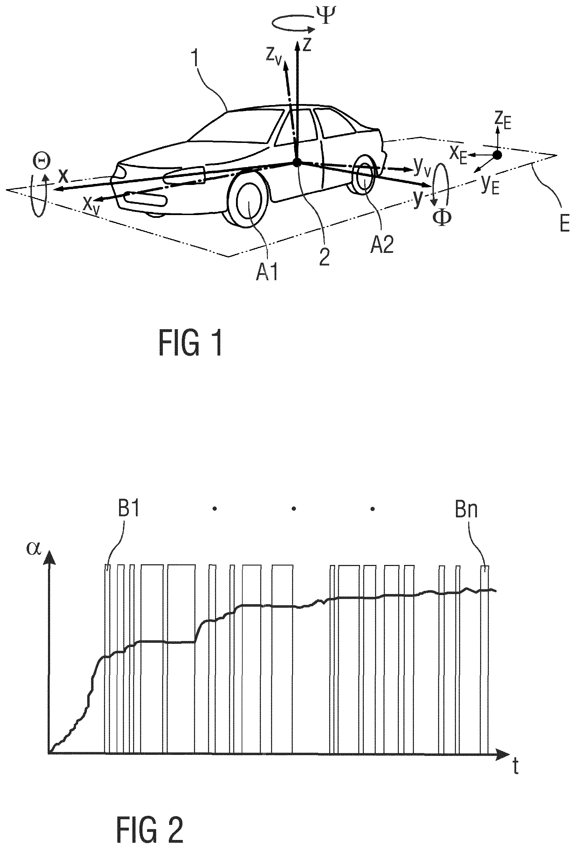

In Figur 1 sind ein Fahrzeug 1, insbesondere ein Landfahrzeug, ein kartesisches Fahrzeugkoordinatensystem, ein kartesisches Sensorkoordinatensystem sowie ein Fahruntergrund, insbesondere eine Fahruntergrundebene E, mit einem kartesischen Untergrundkoordinatensystem dargestellt.

Das Fahrzeugkoordinatensystem ist an einer Karosserie des Fahrzeugs 1 fixiert und weist eine Querachse $y_v$, eine Längsachse $x_v$ und eine Hochachse $z_v$ auf. Ein Ursprung des Fahrzeugkoordinatensystems befindet sich insbesondere im Schwerpunkt des Fahrzeugs 1. Die Hochachse $z_v$ zeigt parallel zum Normalenvektor eines Kabinenbodens und Kabinendachs nach oben, die Längsachse $x_v$ zeigt parallel zu einer Fahrzeuglängsachse und senkrecht zum vorgenannten Normalenvektor, und die Querachse $y_v$ zeigt parallel zu einer Fahrzeugquerachse, ebenfalls senkrecht zum vorgenannten Normalenvektor.

Das Untergrundkoordinatensystem weist ebenfalls eine Querachse $y_E$, eine Längsachse $x_E$ und eine Hochachse $z_E$ auf.

Das Sensorkoordinatensystem ist einer Inertialmesssensorik 2 des Fahrzeugs 1 zugewiesen und weist ebenfalls eine Querachse y, eine Längsachse x und eine Hochachse z auf.

Die Fehlausrichtung der Inertialmesssensorik 2, welche beispielsweise zum Betrieb eines Antiblockiersystems, einer Fahrdynamikregelung und/oder anderen Anwendungszwecken verwendet wird, resultiert aus einer Verdrehung des Sensorkoordinatensystems zum Fahrzeugkoordinatensystem. Die Gründe hierfür liegen beispielsweise in einer fehlerhaften Orientierung von Sensorachsen in einem Sensorpackage der Inertialmesssensorik 2 durch einen Sensorhersteller, in einer fehlerhaften Ausrichtung auf einer Steuergeräteplatine der Inertialmesssensorik 2, einer verdrehten Montage in das Steuergerätegehäuse oder einer verdrehten Anbringung des Gehäuses der Inertialmesssensorik 2 an der Fahrzeugkarosserie. In der Realität spielen alle Komponenten gleichzeitig eine Rolle in der Fehlausrichtung der Inertialmesssensorik 2 zum Fahrzeugkoordinatensystem.

Die die Fehlausrichtung beschreibende Verdrehung der Inertialmesssensorik 2 ist durch eine Abfolge von drei Rotationen $\Theta, \Phi, \Psi$ beschreibbar, die als Wank-, Nick und Gierwinkel betrachtet werden können. Für verschiedene fahrdynamische Regelungen und Aufgaben des Fahrzeugs, beispielsweise auch die Fahrdynamikregelung, werden jedoch Beschleunigungen im Fahrzeugkoordinatensystem benötigt, um eine korrekte Berechnung durchführen zu können.

Für einen zuverlässigen und exakten Betrieb der Inertialmesssensorik 2 ist eine Kalibrierung erforderlich, wobei in der Kalibrierung zu erfassende Fehlerquellen der Inertialmesssensorik 2 unter anderem die Fehlausrichtung des Sensorkoordinatensystems bezüglich des Fahrzeugkoordinatensystems durch Packaging, Einbau und Montage, ein Offset eines Beschleunigungssensors der Inertialmesssensorik 2 und ein Offset eines Drehratensensors der Inertialmesssensorik 2 darstellen. Durch diese Kalibrierung ist es möglich, die Inertialmesssensorik 2 zurück in Orientierung des Fahrzeugs 1, das heißt die Orientierung des Fahrzeugkoordinatensystems, zu drehen.

Dabei wird angenommen, dass alle jeweiligen Sensor-Achsen der Inertialmesssensorik 2 (Querachse y, Längsachse x, Hochachse z) senkrecht zueinander liegen und Koordinatensysteme eines Drehratensensors der Inertialmesssensorik 2 und eines Beschleunigungssensors der Inertialmesssensorik 2 übereinstimmen.

Die vorliegende Idee der Kalibration ist beispielsweise eine Auswertung von Beschleunigungsrichtungen, die am Fahrzeug 1 auftreten. Für eine Grundkalibrierung wird dabei ein Basiszustand des Fahrzeugs 1 definiert, der für die Kalibrierung verwendet werden soll. Insbesondere ist dieser Basiszustand dadurch gekennzeichnet, dass sich ein erwachsener Fahrer im Fahrzeug 1 befindet und ein Kraftstofftank halb gefüllt ist. Anderweitige Situationen mit großer Beladung und Passagieren werden nun durch zumindest einen an einer Achse A1, A2 des Fahrzeugs 1 verbauten Niveausensor und beispielsweise durch Sitzbelegungsmatten erfasst und für die Kalibrierung ausgeschlossen.

Das heißt, in der automatisiert gesteuerten Kalibrierung der Inertialmesssensorik 2 werden unter Zuhilfenahme des zumindest einen nicht näher dargestellten Niveausensors Rotationszustände des Fahrzeugs 1 erkannt. Dabei werden Fehlorientierungen und Offsets des Sensorkoordinatensystems der Inertialmesssensorik 2 ermittelt und die Kalibrierung wird während eines Fahrbetriebs des Fahrzeugs 1 für einen vorgegebenen Zeitraum durchgeführt. In der Kalibrierung wird eine Fehlausrichtung des Sensorkoordinatensystems bezüglich des Fahrzeugkoordinatensystems ermittelt, wobei die Ermittlung der Fehlausrichtung in Situationen während des Fahrbetriebs unterbrochen wird, in denen mittels des fahrzeugeigenen Niveausensors eine einen vorgegebenen Schwellwert übersteigende Niveauabweichung gegenüber einem Referenzniveau festgestellt wird.

Dabei wird die Fehlausrichtung des Sensorkoordinatensystems bezüglich des Fahrzeugkoordinatensystems anhand eines aus einer Ausrichtung der Längsachse x des Sensorkoordinatensystems zu der Längsachse $x_v$ des Fahrzeugkoordinatensystems ermittelten und in Figur 2 näher dargestellten statischen Nickwinkels $\alpha$ ermittelt. Wie bereits ausgeführt, ist das Fahrzeugkoordinatensystem dabei derart definiert, dass seine von der Längsachse $x_v$ und Querachse $y_v$ aufgespannte unter Normalbedingungen, das heißt beispielsweise normaler Beladung des Fahrzeugs, parallel zur Fahruntergrundebene E verläuft. Ein tatsächlicher statischer Nickwinkel $\alpha$ ist damit gleich Null. Der Nickwinkel $\alpha$ wird im Sensorkoordinatensystem gemessen. Wenn der gemessene statische Nickwinkel $\alpha$ ungleich Null ist, dann ist das Sensorkoordinatensystem gegenüber dem Fahrzeugkoordinatensystem verdreht. Der gemessene statische Nickwinkel $\alpha$ gibt dabei an, um wieviel Grad das Sensorkoordinatensystem um die Nickachse gegenüber dem Fahrzeugkoordinatensystem verdreht ist. Der Nickwinkel $\alpha$ entspricht somit der Fehlausrichtung der Längsachse x des Sensorkoordinatensystems bezüglich der Längsachse $x_v$ des Fahrzeugkoordinatensystems.

Weiterhin können die genannten Informationen mit hochgenauen Kartendaten zusammengeführt werden, um mittels einer aktuellen geografischen Höhe, einer Neigung des Fahruntergrunds und einer Neigung des Fahrzeugs zu diesem Fahruntergrund eine Abschätzung einer wirkenden Gravitationsbeschleunigung zu erhalten. Hiermit kann in Zeitabschnitten ohne weitere Beschleunigungen ein Vergleich zwischen einer mittels der Inertialmesssensorik 2 gemessenen Beschleunigung mit der geschätzten Gravitationsbeschleunigung vorgenommen werden, um den Offset des Beschleunigungssensors der Inertialmesssensorik 2 gemäß Gemessene Beschleunigung = Gravitation + Fahrzeugbeschleunigung + Inertialkräfte + Offset

zu erhalten.

Die Zeitabschnitte ohne weitere Beschleunigung können beispielsweise durch Raddrehzahlsensoren und einen Radeinschlagwinkel erfasst werden, wobei angenommen wird, dass bei konstanter Raddrehzahl keine Fahrzeugbeschleunigung vorliegt und dann, wenn kein Radeinschlagwinkel und keine Rotationsänderung über Niveausensoren erkannt werden, keine Inertialkräfte vorliegen.

Weiterhin ist es möglich, eine gemessene Verdrehung der Fahrzeugkarosserie zwischen dem Drehratensensor und dem Niveausensor abzugleichen. Hierbei muss beachtet werden, dass die Systeme unterschiedliche Drehungen messen. Der Drehratensensor misst eine komplette Verdrehung des Fahrzeugs 1 im Raum, wohingegen der Niveausensor ausschließlich eine relative Drehung zur Fahruntergrundebene E misst.

Deshalb muss für den Abgleich sichergestellt werden, dass eine Neigung der Fahruntergrundebene E sich nicht ändert und eine Oberfläche der Fahruntergrundebene E keine groben Profiländerungen, beispielsweise aufgrund von Schwellen und/oder Schlaglöchern, aufweist. Bewegungen, die diese Kriterien erfüllen, sind rein beschleunigungsinduzierte, auch bremsinduzierte, Nick- und Wankbewegungen des Fahrzeugs 1. Anhand der hochgenauen Kartendaten kann dann überprüft werden, ob eine Neigung der Fahruntergrundebene E in einem vorgegebenen Abschnitt konstant war. Die Ebenheit der Oberfläche der Fahruntergrundebene E wird mittels Daten einer optischen Umgebungserfassungssensorik, beispielsweise einer Kamera und/oder eines Lidars, überprüft. Erst wenn diese Bedingungen erfüllt sind, werden die Messwerte für eine Offset-Kalibration des Drehratensensors der Inertialmesssensorik 2 verwendet.

Hierbei kann je nach bereits vorhandener Inertialmesssensorik 2, welche beispielsweise bereits für eine Fahrdynamikregelung und andere Fahrerassistenzsysteme im Fahrzeug 1 vorhanden sind, eine Minimierung der Kosten erreicht werden und je nach gewünschter Genauigkeit und Redundanz des Systems eine entsprechende Kombination ausgewählt werden.

In Figur 2 ist ein Lernverlauf eines gelernten Sensor-Einbauwinkels, insbesondere eines gelernten Nickwinkels $\alpha$, in Abhängigkeit einer Fahrzeit t dargestellt. Weiterhin sind Bereiche B1 bis Bn dargestellt, in welche die Werte des Niveausensors gemäß obiger Beschreibung verwendet werden, um die Kalibrierung und somit den Lernprozess des Nickwinkels $\alpha$ während des Fahrbetriebs des Fahrzeugs 1 zu unterbrechen.

Das heißt, der Kalibrierungsprozess wird in Situationen mit veränderter Fahrwerkssituation des Fahrzeugs 1 pausiert, beispielsweise bei einer großen Beladung und damit einem statischen konstanten Nickwinkel $\alpha$, der ansonsten

in die Kalibrierung mit einfließen würde.

Andere Fehlerquellen sind beispielsweise Fahrzeugverspannungen bei Anhaltesituationen mit angezogener Bremse oder an Schrägen mit großer Neigung, die ebenfalls zu statischen Nickwinkeln $\alpha$ führen. Diese Situationen können ebenfalls effizient über die Information des Niveausensors erkannt werden.

**Patentansprüche**

1. Verfahren zur Kalibrierung einer Inertialmesssensorik (2) eines Fahrzeugs (1), wobei die Kalibrierung während eines Fahrbetriebs des Fahrzeugs (2) durchgeführt wird und auf einer Ermittlung einer Fehlausrichtung eines Sensorkoordinatensystems der Inertialmesssensorik (2) bezüglich eines Fahrzeugkoordinatensystems beruht,
   **dadurch gekennzeichnet, dass**
   die Ermittlung der Fehlausrichtung in Situationen unterbrochen wird, in denen mittels zumindest eines fahrzeugeigenen Niveausensors eine einen vorgegebenen Schwellwert übersteigende Niveauabweichung gegenüber einem Referenzniveau festgestellt wird, wobei

   - anhand von Kartendaten einer digitalen Straßenkarte überprüft wird, ob in einem vorgegebenen Abschnitt eine Änderung einer Neigung der Fahruntergrundebene (E) vorliegt, und mittels einer optischen Umgebungserfassungssensorik überprüft wird, dass in einem vorgegebenen Abschnitt Profiländerungen der Fahruntergrundebene (E) einen vorgegebenen Schwellwert nicht überschreiten,
   - mittels der Inertialmesssensorik (2) eine Verdrehung des Fahrzeugs (1) im Raum ermittelt wird,
   - mittels des Niveausensors eine relative Verdrehung des Fahrzeugs (1) zu der Fahruntergrundebene (E) ermittelt wird und
   - dann, wenn keine Änderung einer Neigung der Fahruntergrundebene (E) vorliegt und Profiländerungen der Fahruntergrundebene (E) den vorgegebenen Schwellwert nicht überschreiten in einem Abgleich der mittels der Inertialmesssensorik (2) ermittelten Verdrehung mit der mittels des Niveausensors ermittelten relativen Verdrehung ein Offset eines Drehratensensors der Inertialmesssensorik (2) ermittelt wird.

2. Verfahren nach Anspruch 1,
   **dadurch gekennzeichnet, dass** die Fehlausrichtung des Sensorkoordinatensystems bezüglich des Fahrzeugkoordinatensystems anhand eines aus einer Ausrichtung einer Längsachse (x) des Sensorkoordinatensystems zu einer Längsachse ($x_v$) des Fahrzeugkoordinatensystems ermittelten statischen Nickwinkels ($\alpha$) ermittelt wird.

3. Verfahren nach Anspruch 1 oder 2,
   **dadurch gekennzeichnet, dass** das Fahrzeugkoordinatensystem derart definiert wird, dass eine von einer Querachse ($y_v$) und einer Längsachse ($x_v$) des Fahrzeugs (1) aufgespannte Ebene unter vorgegebenen Normalbedingungen parallel zu einer Fahruntergrundebene (E) verläuft.

4. Verfahren nach einem der vorhergehenden Ansprüche,
   **dadurch gekennzeichnet, dass**

   - anhand einer ermittelten Ausrichtung des Sensorkoordinatensystems, anhand von Kartendaten einer digitalen Straßenkarte, insbesondere einer geografischen Höhe und einer Straßenneigung, und anhand einer Neigung des Fahrzeugs (1) zu einer Fahruntergrundebene (E) eine wirkende Gravitationsbeschleunigung geschätzt wird,
   - während des Fahrbetriebs des Fahrzeugs (1) in Zeitabschnitten ohne weitere Beschleunigung ein Vergleich einer mittels der Inertialmesssensorik (2) gemessenen Beschleunigung mit der geschätzten Gravitationsbeschleunigung durchgeführt wird und
   - anhand von Ergebnissen des Vergleichs ein Offset der Inertialmesssensorik (2) bezüglich der Beschleunigungsmessung ermittelt wird.

5. Verfahren nach einem der vorhergehenden Ansprüche,
   **dadurch gekennzeichnet, dass** die Kalibrierung während des Fahrbetriebs des Fahrzeugs (2) in einem vorgegebenen Zeitraum durchgeführt wird.

6. Verfahren nach Anspruch 5,
   **dadurch gekennzeichnet, dass** die Kalibrierung auf einer dem vorgegebenen Zeitraum durchgeführten Erfassung und Auswertung einer Vielzahl von Werten einer Längsbeschleunigung und Querbeschleunigung des Fahrzeugs (1) beruht.

**7.** Verfahren nach Anspruch 6,
**dadurch gekennzeichnet, dass** aus den erfassten Werten der Längsbeschleunigung und Querbeschleunigung des Fahrzeugs (1) Langzeitmittelwerte gebildet werden und die Kalibrierung anhand dieser Langzeitmittelwerte durchgeführt wird.

**8.** Verfahren nach einem der vorhergehenden Ansprüchen,
**dadurch gekennzeichnet, dass** die Kalibrierung auf zumindest einem lernenden Algorithmus beruht.

**9.** Verfahren zur Leuchtweitenregulierung zumindest eines Scheinwerfers eines Fahrzeugs (1), wobei

- eine Inertialmesssensorik (2) gemäß einem Verfahren nach einem der vorhergehenden Ansprüche kalibriert wird,
- mittels der kalibrierten Inertialmesssensorik (2) eine Ausrichtung des Fahrzeugs (1) relativ zu einer Fahruntergrundebene (E) ermittelt wird und
- in Abhängigkeit der ermittelten Ausrichtung die Leuchtweite des Scheinwerfers reguliert wird.

**Claims**

**1.** Method for calibrating an inertial measurement sensor system (2) of a vehicle (1), the calibration being carried out during a driving operation of the vehicle (2) and being based on determining a misalignment of a sensor coordinate system of the inertial measurement sensor system (2) with respect to a vehicle coordinate system,
**characterized in that**
determining misalignment is interrupted in situations in which, by means of at least one level sensor belonging to the vehicle, a level deviation exceeding a predetermined threshold is identified relative to a reference level,

- a check being performed, based on map data from a digital road map, as to whether there is a change in the inclination of the driving surface plane (E) in a predetermined portion, and a check being performed as to whether using an optical environment-recording sensor system that profile changes of the driving surface plane (E) in a predetermined portion do not exceed a given threshold value,
- a rotation of the vehicle (1) in space being determined by means of the inertial measurement sensor system (2),
- a relative rotation of the vehicle (1) toward the driving surface plane (E) being determined by means of the level sensor and
- an offset of a rotation rate sensor of the inertial measurement sensor system (2) then being determined, if there is no change in the inclination of the driving surface plane (E) and profile changes of the driving surface plane (E) do not exceed the predetermined threshold, by comparing the rotation determined by means of the inertial measurement sensor system (2) with the relative rotation determined by means of the level sensor.

**2.** Method according to claim 1,
**characterized in that** the misalignment of the sensor coordinate system with respect to the vehicle coordinate system is determined based on a static pitch angle ($\alpha$) determined from an alignment of a longitudinal axis (x) of the sensor coordinate system to a longitudinal axis ($x_v$) of the vehicle coordinate system.

**3.** Method according to claim 1 or claim 2,
**characterized in that** the vehicle coordinate system is defined such that a plane spanned by a lateral axis ($y_v$) and a longitudinal axis ($x_v$) of the vehicle (1) runs, under predetermined normal conditions, parallel to a driving surface plane (E).

**4.** Method according to any of the preceding claims,
**characterized in that**

- an acting gravitational acceleration is estimated based on a determined alignment of the sensor coordinate system, based on map data from a digital road map, in particular a geographical altitude and a road gradient, and based on an inclination of the vehicle (1) toward a driving surface plane (E),
- during the driving operation of the vehicle (1) in time periods without further acceleration, a comparison is carried out between an acceleration measured by means of the inertial measurement sensor system (2) and the estimated gravitational acceleration, and
- based on the results of the comparison, an offset of the inertial measurement sensor system (2) with respect to the acceleration measurement is determined.

5. Method according to any of the preceding claims,
   **characterized in that** the calibration is carried out during the driving operation of the vehicle (2) within a predetermined period of time.

6. Method according to claim 5,
   **characterized in that** the calibration is based on the recording and evaluation, carried out within a predetermined period of time, of a large number of values of longitudinal and lateral acceleration of the vehicle (1).

7. Method according to claim 6,
   **characterized in that** long-term mean values are formed from the recorded values of the longitudinal acceleration and lateral acceleration of the vehicle (1), and the calibration is carried out on the basis of these long-term mean values.

8. Method according to any of the preceding claims,
   **characterized in that** the calibration is based on at least one learning algorithm.

9. Method for adjusting the beam range of at least one headlight of a vehicle (1), wherein

   - an inertial measurement sensor system (2) is calibrated according to a method according to any of the preceding claims,
   - an alignment of the vehicle (1) relative to a driving surface plane (E) is determined by means of the calibrated inertial measurement sensor system (2), and
   - the beam range of the headlight is adjusted depending on the determined alignment.

**Revendications**

1. Procédé d'étalonnage d'un système de capteurs de mesure inertielle (2) d'un véhicule (1), dans lequel l'étalonnage est réalisé pendant une opération de conduite du véhicule (2) et repose sur une détermination d'un défaut d'alignement d'un système de coordonnées de capteur du système de capteurs de mesure inertielle (2) par rapport à un système de coordonnées de véhicule,
   **caractérisé en ce que**
   la détermination du défaut d'alignement est interrompue dans des situations dans lesquelles un écart de niveau dépassant une valeur seuil prédéfinie par rapport à un niveau de référence est constaté par le biais d'au moins un capteur de niveau propre au véhicule, dans lequel

   - à l'aide de données cartographiques d'une carte routière numérique, on vérifie s'il y a une modification d'une inclinaison du plan de base de conduite (E) dans une section prédéfinie, et par le biais d'un système de capteurs optiques de saisie d'environnement, on vérifie que dans une section prédéfinie, des modifications de profil du plan de base de conduite (E) ne dépassent pas une valeur de seuil prédéfinie,
   - une rotation du véhicule (1) dans l'espace est déterminée par le biais du système de capteurs de mesure inertielle (2),
   - une rotation relative du véhicule (1) par rapport au plan de base de conduite (E) est déterminée par le biais du capteur de niveau et
   - lorsqu'il n'y a pas de modification d'une inclinaison du plan de base de conduite (E) et que les modifications de profil du plan de base de conduite (E) ne dépassent pas la valeur seuil prédéfinie, un décalage d'un capteur de vitesse de rotation du système de capteurs de mesure inertielle (2) est déterminé dans une comparaison de la rotation déterminée par le biais du système de capteurs de mesure inertielle (2) avec la rotation relative déterminée par le biais du capteur de niveau.

2. Procédé selon la revendication 1,
   **caractérisé en ce que** le défaut d'alignement du système de coordonnées de capteur par rapport au système de coordonnées de véhicule est déterminé à l'aide d'un angle de tangage statique ($\alpha$) déterminé à partir d'un alignement d'un axe longitudinal (x) du système de coordonnées de capteur par rapport à un axe longitudinal ($x_v$) du système de coordonnées de véhicule.

**3.** Procédé selon la revendication 1 ou 2,
**caractérisé en ce que** le système de coordonnées de véhicule est défini de telle sorte qu'un plan formé par un axe transversal ($y_V$) et un axe longitudinal ($x_V$) du véhicule (1) s'étend parallèlement à un plan de base de conduite (E) dans des conditions normales prédéfinies.

**4.** Procédé selon l'une des revendications précédentes,
**caractérisé en ce que**

- à l'aide d'un alignement déterminé du système de coordonnées de capteur, à l'aide de données cartographiques d'une carte routière numérique, en particulier d'une altitude géographique et d'une inclinaison de la route, et à l'aide d'une inclinaison du véhicule (1) par rapport à un plan de base de conduite (E), une accélération gravitationnelle active est estimée,
- pendant le fonctionnement de conduite du véhicule (1), dans des sections de temps sans autre accélération, une comparaison est réalisée entre une accélération mesurée par le biais du système de capteurs de mesure inertielle (2) et l'accélération gravitationnelle estimée et
- un décalage du système de capteurs de mesure inertielle (2) par rapport à la mesure d'accélération est déterminé à l'aide de résultats de la comparaison.

**5.** Procédé selon l'une des revendications précédentes,
**caractérisé en ce que** l'étalonnage est réalisé pendant le fonctionnement de conduite du véhicule (2) dans une période de temps prédéfinie.

**6.** Procédé selon la revendication 5,
**caractérisé en ce que** l'étalonnage repose sur une saisie et une évaluation d'une pluralité de valeurs d'accélération longitudinale et d'accélération transversale du véhicule (1) réalisées pendant la période de temps prédéfinie.

**7.** Procédé selon la revendication 6,
**caractérisé en ce que** des valeurs moyennes à long terme sont formées à partir des valeurs saisies de l'accélération longitudinale et de l'accélération transversale du véhicule (1) et l'étalonnage est réalisé à l'aide de ces valeurs moyennes à long terme.

**8.** Procédé selon l'une des revendications précédentes,
**caractérisé en ce que** l'étalonnage repose sur au moins un algorithme d'apprentissage.

**9.** Procédé de régulation de portée d'éclairage d'au moins un projecteur d'un véhicule (1), dans lequel

- un système de capteurs de mesure inertielle (2) est étalonné selon un procédé selon l'une des revendications précédentes,
- un alignement du véhicule (1) par rapport à un plan de base de conduite (E) est déterminé par le biais du système de capteurs de mesure inertielle (2) étalonné, et
- en fonction de l'alignement déterminé, la portée d'éclairage du projecteur est régulée.

FIG 1

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005033237 A1
- DE 102015115282 A1
- DE 102004045890 A1
- CN 108819831 A
- WO 2017129199 A1
- US 20130166099 A1
- EP 3171134 A1
- DE 102017005019 A1
- US 20180154902 A1
- US 2004099044 A1